# EUROPEAN PATENT SPECIFICATION

(11) **EP 1 762 110 B1**
(45) Date of publication and mention of the grant of the patent: **19.11.2014**
(21) Application number: 05751799.7
(22) Date of filing: 16.06.2005
(51) Int. Cl.: H04W 24/00

(54) **METHOD OF GENERATING A TEST ROUTINE**
VERFAHREN ZUR ERZEUGUNG EINER TESTROUTINE
PROCEDE PERMETTANT DE GENERER UN PROGRAMME D'ESSAI

(30) Priority: 16.06.2004 GB 0413393
(43) Date of publication of application: 14.03.2007
(73) Proprietor: Ascom Network Testing Ltd., Elstead Surrey GU8 6LB (GB)
(72) Inventor: PEARCE, James, Arford,Hampshire GU35 8DN (GB); BYTTNER, Anders, S-113 23 Stockholm (SE)
(74) Representative: Gray, Peter John Bracey
(86) International application number: PCT/GB2005/002363
(87) International publication number: WO 2005/125247

(56) References cited:
- EP-A- 1 376 438
- US-A1- 2002 183 956
- US-A1- 2003 167 334

## Description

### Field of Invention

The invention relates to a method of generating a test routine. More specifically, the invention relates to generating a routine for testing services to be provided over a mobile telecommunications network.

### Background to the invention

There are large varieties of mobile telephones and other mobile telecommunication devices in current use. The capabilities of these mobile devices are diverse. Some devices support just voice communication and the sending and receiving of Short Messaging Service (SMS) messages. Other devices add to these capabilities, for example by supporting Multimedia Messaging Service (MMS) messages or Wireless Application Protocol (WAP) data services. Consequently, different mobile devices can have very different operational characteristics or attributes. For example, mobile devices may have screens that are monochrome or colour and that vary widely in size. Similarly, the range of symbols and characters that can be displayed by different mobile devices may vary. Some mobile devices can play polyphonic ring-tones, whilst others cannot. So-called "smartphones" now have sophisticated software and are able to support many functions, such as email and diary facilities, that were previously only available in dedicated Personal Digital Assistants (PDAs).

In the applicants' United Kingdom patent application no. 0316096.7 (publication no. GB2403872), the applicants recognise that the different operational characteristics of mobile devices can make it difficult for network operators to assure quality of service. For example, content accessible over a network, such as Websites including Wireless Mark-up Language (WML) encoded content, may not be properly displayed on all mobile devices. In the patent application mentioned above, a new method and apparatus for profiling the operational characteristics of mobile devices is disclosed. The profiled characteristics can be used determine whether or not services can be used successfully by a mobile device, without having the mobile device itself to hand. Thus, the testing of services can be automated and made more efficient and cost effective.

When mobile devices are profiled using the method and apparatus described in the applicants' earlier patent application, a database of profile data is created. This profile data has the nature of answers to questions. For example, the profiling process may test whether or not a device displays bold text. If the device displays bold text, the profile data includes an affirmative response. If not, the profile data includes a negative response. In another example, the largest image width displayed by a mobile device may be included in the profile data as a value. Indeed, it can be appreciated that almost all operational characteristics of a mobile device can be defined by values and affirmations (e.g. Boolean values).

One way to test the services to be provided over a network is to compare the profiled operational characteristics, e. g. the database of profile data, to information about the services. For example, content such as Web pages to be made available over the network could first be analysed to see what operational characteristics mobile devices require to handle the content correctly. These required operational characteristics could then be compared to the profiled operational characteristics of the mobile devices, e. g. the database of profile data, to identify mobile devices that cannot handle the content properly. Taking the bold text example, this would involve testing the content to see whether or not it contains bold text. Assuming this results in an affirmation, the database of profile data can then be checked to retrieve a list of mobile devices, if any, that will not display the bold text.

However, the applicants have recognised a number of problems with this approach. For example, first analysing the services then comparing the results of the analysis with the entire database of profile data requires a large amount of processing. This can make testing services slow and cumbersome. Furthermore, as it is desirable to allow users to test content and services themselves, the entire database of profile data needs to be provided to users and updated when required. The database is large and a large amount of data may therefore need to be provided to the users, e. g. over the internet or on disk. Dealing with large amounts of data is frustrating and time consuming for users. Also, the database of profile data is commercially valuable, as it takes a great deal of time and effort to compile, and it is therefore undesirable to give users access to it. The present invention seeks to overcome these problems.

US 2003/0167334 describes a method of authoring material for dissemination over an information technology network. The capabilities required in order to manifest content from a web page are specified with reference to the content of the web page. These requisite capabilities are then compared with the technical attributes possessed by a client device.

EP 1376438 describes the management and delivery of digital content from multiple content suppliers to multiple wireless services subscribers. A product catalogue contains descriptions of items of content, and the products shown to any particular subscriber are filtered according to the capabilities of the subscriber's device.

### Summary of Invention

The reader is referred to the appended independent claims. Some preferred features are laid out in the dependent claims.

Preferred embodiments of the present invention will now be described, by way of example only, with reference to the accompanying drawings.

### Brief Description of the Drawings

Figure 1 is a block diagram illustrating a system for generating a test routine according to the invention; and
Figure 2 is a flow chart illustrating operation of the system of figure 1.

### Detailed Description

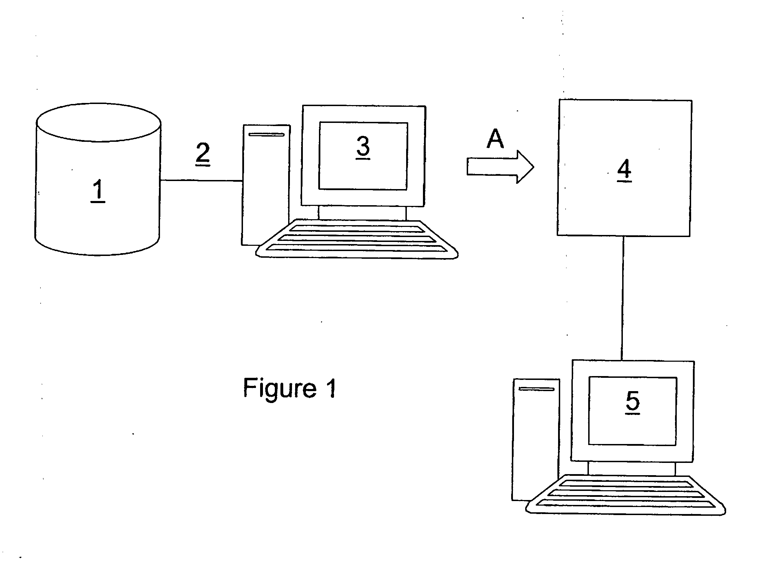

Referring to figure 1, a database 1 stores profile data defining operational characteristics of mobile devices. The database 1 is connected to a personal computer (PC) 3 via a Local Area Network (LAN) 2. The PC 3 is configured to read the profile data in the database 1 and process it to generate a test routine, as described in more detail below. The PC 3 is also able to upload the generated test routine onto a Web server 4. The connection of the PC 3 to the Web server 4 is protected by a firewall, represented by arrow A in figure 1, to prevent unauthorised access to the PC 3 or the database 1 via the Web server 4. Thus, both the database 1 and the PC 3 remain secure within the LAN 2 and the PC 3 is referred to as internal PC 3 in this document. The Web server 4 can, of course, generally be accessed by any computer via the Internet, such as PC 5 illustrated in figure 1, although access to the uploaded test routines is actually restricted to only authorised users, as described in more detail below. PC 5 illustrates an authorised user and is referred to as external PC 5 in this document.

In this example, the profile data is largely obtained using the method and apparatus described in the applicants' United Kingdom patent application no. 0316096.7 (publication no. GB2403872). Briefty, this patent application describes a profiling server that can communicate simultaneously with a mobile device over a radio communication network and with a Web browser. The server outputs test data to the mobile device, for example in the form of wireless mark-up language (WML) encoded data, Java^{™} 2 Micro Edition (J2ME^{™}) encoded data, SMS messages, MMS messages or ringtones and outputs pages of questions to the Web browser, generally in the form of hyper-text mark-up language (HTML) or Javascipt^{™} data. A user answers the questions on the Web browser based on the way in which the mobile device handles the test data. The answers to the questions are sent to the server and stored as profile data in the database 1. Of course, other methods and apparatus can be used to obtain the profile data. For example, in another embodiment, the profile data may be imported from a listing held elsewhere, such as the UAProf profile repository, which can be found at http://development.de/rdf/uaprof_repository/. In yet another example, the profile data may be collated and input into the database 1 entirely manually. Regardless of how the profile data is obtained, it typically takes the form of answers to questions. For example, the profile data can record whether a mobile device displays bold text. This item of profile data takes the form of a Boolean value, e.g. yes or no, although it may be stored in a variety of ways. The database 1 therefore stores profile data in the form of answers to questions.

The stored profile data contains information regarding a large number of characteristics of many mobile devices. Items of profile data representing a particular operational characteristic can be said to have a particular profile data item type. Different types of profile data items record different operational characteristics. Taking the example above, a bold text profile data item for each mobile device records whether or not the respective mobile device displays bold text.

Other items of profile data record the types of media that a device supports. For example, profile data items may record: whether or not a particular ring-tone format, such as a polyphonic ring-tone, is supported; whether or not picture messages can be received by the mobile device; or whether or not the mobile device can display and support Java^{™} executables.

Some items of profile data can record how pages of WML encoded data are displayed. For example, the profile data may record whether or not tags in WML data representing tables, forms or other types of page structures are handled correctly by the device.

Some items of profile data can record limitations to the size of particular items of content that the device can handle. In other words, the profile data can record the boundary conditions of the content supported by the device. For example, the profile data can record the size of the largest page of content, Short Messaging Service message or ring-tone supported by the device.

Some items of profile data can record whether or not certain typographical characters are displayed by a mobile device. For example, some mobile devices may not display non-ASCII characters, such as accented letters, currency symbols and whole alphabets such as Eastern European, Cyrillic, Hebrew etc. A profile data item may therefore include all characters from a list that are not displayed by the mobile device.

Some items of profile data can record the limitations of the mobile device's ability to display images. For example, the profile data may record whether or not certain image formats can be displayed by the device, such as Tagged Image File (TIF) images and Joint Photographic Experts Group (JPEG) images. Similarly, the largest dimensions of an image displayed by the mobile device and/or the colour palettes supported by the device can be recorded.

The above examples are neither exclusive nor exhaustive. The profile data can record some or all of the above characteristics. Likewise, it may record other characteristics not mentioned above.

The internal PC 3 converts the stored profile data into a test routine. The test routine comprises queries for addressing a data file representing information to be provided over a mobile telecommunications network and returning a response dependent on the content of the data file. In this embodiment, the queries comprise lines of Xpath^{™} code. Xpath^{™} is a language for addressing files of Extensible Mark-up Language (XML^{™}) coded data.

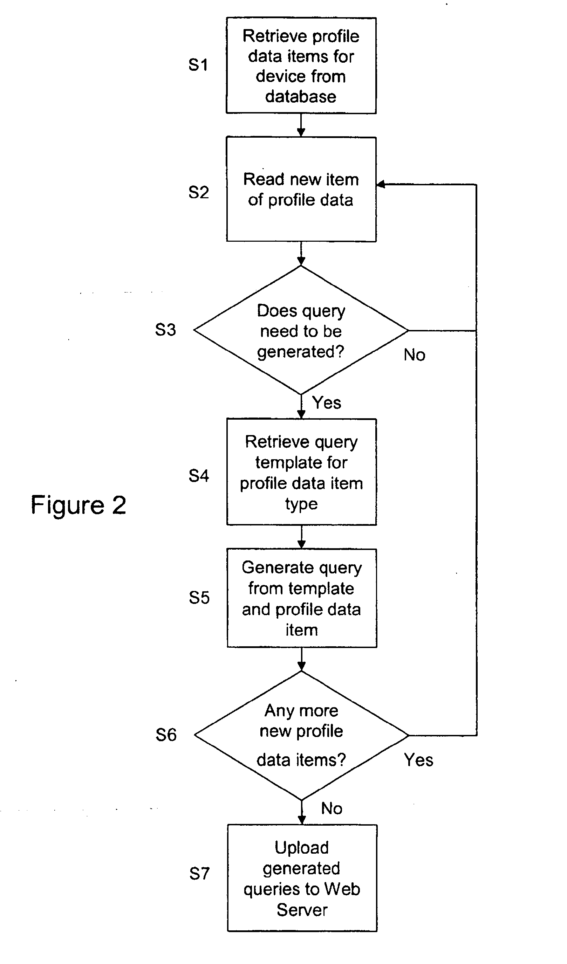

In more detail, referring to figure 2, when it is desired to generate a test routine, the PC 3 retrieves the profile data items from which the routine is to be generated from the database 1 (step S1). The stored profile data typically includes the operational characteristics of many mobile devices. In this embodiment, a test routine is generated for each mobile device in turn. So, in step S1, the profile data relating to a first mobile device is retrieved from the database 1 and temporarily stored in the PC 3, e.g. in its random access memory (RAM).

The PC 3 stores a look-up table of query templates. Each query template corresponds to a particular profile data item type. The PC 3 reads a first item of profile data (step S2) and, from the type of profile data item and, if necessary, the value of the profile data item, determines first whether or not a query needs to be generated (step S3). If a query needs to be generated, the PC 3 retrieves the query template corresponding to the read profile data item (step S4). From the item of profile data and the query template, the PC 3 then generates a query (step S5), e.g. a line of Xpath^{™} code in this embodiment.

Taking the bold text example for illustration, the bold text profile data item comprises a Boolean value, equivalent to either "yes" or "no" in response to the question "does the mobile device support bold text?". The query template for the bold text profile data item comprises a line of Xpath^{™} code, ".//b". This code will return a positive response if a bold data tag is present in a XML^{™} data file. In this example, if the device supports bold text, e.g. the Boolean value of the bold text profile data item is "yes", the PC 3 determines that no query is to be generated. However, if the device does not support bold text, e.g. the Boolean value of the bold text profile data item is "no", the PC 3 generates a query comprising the Xpath^{™} code ".//b".

Maximum displayed image width can be taken as another example. The maximum displayed image width profile data item comprises a value, e.g. 64 pixels. The query template for the maximum displayed image width comprises a line of Xpath^{™} code, ".//image[@width > N]", where N is a number of pixels. Provided the image width profile data item has a finite value, the PC 3 combines the maximum displayed image width profile data item and query template to generate a query, e.g. ".//image[@width > 64]".

Characters not displayed by a mobile can be taken as a further example. The characters not displayed profile data item comprises a list of characters not displayed, e.g. $ - US Dollar and £ - British Pound. The query template for the characters not displayed comprises a line of Xpath^{™} code ".//contains (text(), C)", where C is a character. Provided one or more characters are listed in the characters not displayed profile data item, the PC 3 inserts each of the characters listed in the profile data item into the query template to generate a separate query template for each character in the list, e.g. ".//contains (text(), $)" and ".//contains (text(), £)".

In this example, the generated queries each also have a name field and a consequence field. In this example, these are generated from corresponding fields in the query template. When the test routine is run by a user, as described in more detail below, the consequence field can be included in a report showing potential difficulties that my be encountered in using the services represented by the data file.

Taking the characters not displayed profile data item as an example, the query template for the characters not displayed further comprises a "PageContainsC" name field and a "C symbol in page will not render on device" consequence field. When the PC 3 generates the query or queries from the characters not displayed profile data item, the listed characters are also inserted in these fields. Thus, using the US Dollar and British Pound example described above, the two queries would read:
XPath: ".//contains(text(), "$")"
Name: "PageContainsUSDollar"
Consequence: "USDollar symbol in page will not render on device"
and
XPath: ".//contains(text(), "£")"
Name: "PageContainsBritishPound"
Consequence: "BritishPound symbol in page will not render on device"

Each query may also be allocated one of several categories of severity. The categories can include say "minor cosmetic" or "fatal error". Again, the categories are stored with the query templates and included in each generated query. This can allow users to sort test routine results, as described in more detail below.

Once the query or queries required for the profile data item in question has/have been generated, the PC 3 determines whether or not there are any further new profile data items for the device, e.g. in the PC's RAM (step S6). If there are any further new profile data items, the PC 3 repeats the reading and generation for the further profile data items, e.g. repeats steps S2 to S6. If not, then the PC 3 proceeds to upload the generated test routine to the Web server 4 (step S7).

Of course, the test routines for each mobile device need not be uploaded to the Web server 4 individually. Rather, the PC 3 can generate test routines for all new profile data items in the database 1 and upload all of these test routines to the Web server at once. Typically, the first time the PC 3 accesses the database 1, it generates test routines from the profile data items for each mobile device that has been profiled. These test routines are then uploaded to the Web server 4. Thereafter, the PC 3 periodically accesses the database 1 and generates test routines from the profile data items for each mobile device that has been newly profiled or has had its profile data changed. These test routines are then uploaded to the Web server 4 together.

Authorised users can access the test routines held on the Web server 4, for example using external PC 5. These can then be used to test services to be provided over a mobile telecommunications network. In this embodiment, the external PC 5 has the applicants' Monitor Master^{™} software installed. Using this software, the external PC 5 can access services to be provided over a telecommunications network and collate XML data files representing the services. The external PC 5 gathers Web-pages, parts of picture messages and decompiled WAP pages, which are coded in XML^{™}. Similarly, the external PC 5 can retrieve other data, such as SMS messages, and convert it to XML^{™} coded data. For example, an SMS message can be converted into an SMS XML^{™} data file containing the text of the message, the sender and other meta-information about the message.

Once the test routines have been downloaded from the Web server 4 to the external PC 5 and the XML^{™} data files representing the services to be tested have been collated, the test routines are used to address the content of the data files. The queries in the test routines produce results where there is a potential problem with the services. For example, if a mobile device for which a test routine is present does not support bold text, but a tested data file includes bold text, a result is generated by the test routine. This might comprise the consequence contained in the query, e. g. "This device does not render the bold text present in the page".

Typically, many such results are generated for each data file, as there are a large number of test routines for a large number of mobile devices. The categories of severity can therefore be used to group the results and improve analysis of the results. For example, the test routine results may be stored in a results database so that they can be analysed by a user.

The described embodiments of the invention are only examples of how the invention may be implemented. Modifications, variations and changes to the described embodiments will occur to those having appropriate skills and knowledge. These modifications, variations and changes may be made without departure from the scope of the invention defined in the claims and its equivalents.

## Claims

1. A method of generating a test routine for testing services to be provided to a mobile device over a mobile telecommunications network, the method comprising:
reading (S2) an item of profile data defining an operational characteristic of the mobile device from a database (1) of profile data;
generating (S5), from the item of profile data, a query for addressing content in a data file representing information to be provided to the mobile device over the mobile telecommunications network and returning a response dependent on the content; and
repeating the reading (S2) and generating (S5) for other items of profile data in the database (1) to produce a test routine comprising plural generated queries.

2. The method of claim 1, wherein, for at least some items of profile data that comprise a Boolean value, the generating (S5) comprises only producing a query when the item has either one or the other Boolean value.

3. The method of claim 1 or claim 2, wherein the generating (S5) of at least some of the queries comprises identifying (S4) a query template relating to the respective item of profile data and basing the generated query on that template.

4. The method of any one of the preceding claims, wherein, for at least some items of profile data which comprise a value, the generating (S5) comprises inserting the value into a query template to produce a query.

5. The method of any one of the preceding claims, wherein, for at least some items of profile data which comprise plural values, the generating (S5) comprises inserting each value into a query template to produce a query for each value.

6. The method of any one of the preceding claims, wherein the queries comprise computer program code for addressing the content of the data file.

7. The method of any one of the preceding claims, wherein the queries comprise computer program code for addressing Extensible Mark-up Language, XML^{™}, coded data.

8. The method of any one of the preceding claims, wherein the queries comprise XML^{™} Path Language, Xpath^{™}, computer program code.

9. The method of any one of the preceding claims, wherein at least some of the generated queries can identify whether or not a particular data string is included in the data file.

10. The method of any one of the preceding claims, wherein at least some items of the generated queries can identify whether particular data in the data file exceeds a query value.

11. The method of claim 10, wherein the query value is the same as the value of the profile data item from which the query was generated.

12. The method of any one of the preceding claims, wherein the generated test routine contains queries relating to a single mobile device.

13. The method of any one of the preceding claims, comprising repeating the producing of the test routine for different mobile devices to produce multiple test routines.

14. A method of providing a test routine for testing services to be provided to a mobile device over a mobile telecommunications network, the method comprising:
generating the test routine in accordance with the method of any one of the preceding claims; and
uploading the routine to a secure server (4) for download by authorised users (5).

15. Computer program code adapted to carry out the method of any one of the preceding claims when processed by a computer.

16. The computer program code of claim 15 carried by a computer readable media.

17. A computer configured to carry out the method of any one of claims 1 to 14.

## Patentansprüche

1. Verfahren zum Erzeugen einer Testroutine zum Testen von Diensten, die für ein Mobilgerät über ein Mobiltelekommunikationsnetz bereitgestellt werden sollen, wobei das Verfahren Folgendes umfasst:
Lesen (S2) eines Elements von Profildaten, das eine operative Charakteristik des Mobilgeräts definiert, aus einer Datenbank (1) von Profildaten;
Erzeugen (S5), aus dem Element von Profildaten, einer Abfrage zum Adressieren von Inhalt in einer Datendatei, der Informationen repräsentiert, die für das Mobilgerät über das Mobiltelekommunikationsnetz bereitgestellt werden sollen, und Rücksenden einer Antwort abhängig vom Inhalt; und
Wiederholen des Lesens (S2) und Erzeugens (S5) für andere Elemente von Profildaten in der Datenbank (1), um eine Testroutine zu produzieren, die mehrere erzeugte Abfragen umfasst.

2. Verfahren gemäß Anspruch 1, wobei, für mindestens einige Elemente von Profildaten, die einen booleschen Wert umfassen, das Erzeugen (S5) nur das Produzieren einer Abfrage umfasst, wenn das Element entweder einen oder den anderen booleschen Wert besitzt.

3. Verfahren gemäß Anspruch 1 oder 2, wobei das Erzeugen (S5) von mindestens einigen der Abfragen das Identifizieren (S4) einer Abfragevorlage in Bezug auf das jeweilige Element von Profildaten und das Basieren der erzeugten Abfrage auf dieser Vorlage umfasst.

4. Verfahren gemäß einem der vorhergehenden Ansprüche, wobei, für mindestens einige Elemente von Profildaten, die einen Wert umfassen, das Erzeugen (S5) das Einfügen des Wertes in eine Abfragevorlage umfasst, um eine Abfrage zu produzieren.

5. Verfahren gemäß einem der vorhergehenden Ansprüche, wobei, für mindestens einige Elemente von Profildaten, die mehrere Werte umfassen, das Erzeugen (S5) das Einfügen jeden Wertes in eine Abfragevorlage umfasst, um eine Abfrage für jeden Wert zu produzieren.

6. Verfahren gemäß einem der vorhergehenden Ansprüche, wobei die Abfragen Computerprogrammcode zum Adressieren des Inhalts der Datendatei umfassen.

7. Verfahren gemäß einem der vorhergehenden Ansprüche, wobei die Abfragen Computerprogrammcode zum Adressieren von in Extensible Mark-up Language, XML^{™}, ausgedrückten Daten umfassen.

8. Verfahren gemäß einem der vorhergehenden Ansprüche, wobei die Abfragen XML^{™}-Path-Language-, Xpath^{™}-, Computerprogrammcode umfassen.

9. Verfahren gemäß einem der vorhergehenden Ansprüche, wobei mindestens einige der erzeugten Abfragen identifizieren können, ob ein konkreter Datenstring in der Datendatei eingeschlossen ist oder nicht.

10. Verfahren gemäß einem der vorhergehenden Ansprüche, wobei mindestens einige Elemente der erzeugten Abfragen identifizieren können, ob konkrete Daten in der Datendatei einen Abfragewert überschreiten.

11. Verfahren gemäß Anspruch 10, wobei der Abfragewert der gleiche ist wie der Wert des Profildatenelements, aus dem die Abfrage erzeugt wurde.

12. Verfahren gemäß einem der vorhergehenden Ansprüche, wobei die erzeugte Testroutine Abfragen in Bezug auf ein einzelnes Mobilgerät enthält.

13. Verfahren gemäß einem der vorhergehenden Ansprüche, das das Wiederholen des Produzierens der Testroutine für unterschiedliche Mobilgeräte umfasst, um mehrere Testroutinen zu produzieren.

14. Verfahren zum Bereitstellen einer Testroutine zum Testen von Diensten, die für ein Mobilgerät über ein Mobiltelekommunikationsnetz bereitgestellt werden sollen, wobei das Verfahren Folgendes umfasst:
Erzeugen der Testroutine gemäß dem Verfahren nach einem der vorhergehenden Ansprüche; und
Hochladen der Routine auf einen sicheren Server (4) zum Herunterladen durch autorisierte Benutzer (5).

15. Computerprogrammcode, der angepasst ist, um das Verfahren nach einem der vorhergehenden Ansprüche auszuführen, wenn er durch einen Computer verarbeitet wird.

16. Computerprogrammcode gemäß Anspruch 15, der durch ein computerlesbares Medium geführt wird.

17. Computer, der konfiguriert ist, um das Verfahren nach einem der Ansprüche 1 bis 14 auszuführen.

## Revendications

1. Procédé de génération d'une routine de test pour tester des services devant être fournis à un dispositif mobile sur un réseau de télécommunications mobiles, le procédé comprenant :
la lecture (S2) d'un élément de données de profil définissant une caractéristique de fonctionnement du dispositif mobile à partir d'une base de données (1) de données de profil ;
la génération (S5), à partir de l'élément de données de profil, d'une requête pour adresser un contenu dans un fichier de données représentant des informations devant être fournies au dispositif mobile sur le réseau de télécommunications mobiles et le renvoi d'une réponse dépendant du contenu ; et
la répétition de la lecture (S2) et la génération (S5) d'autres éléments de données de profil dans la base de données (1) afin de produire une routine de test comprenant plusieurs requêtes générées.

2. Procédé selon la revendication 1, dans lequel, pour au moins certains des éléments de données de profil qui comprennent une valeur booléenne, la génération (S5) comprend uniquement la production d'une requête lorsque l'élément a l'une ou l'autre valeur booléenne.

3. Procédé selon la revendication 1 ou la revendication 2, dans lequel la génération (S5) d'au moins certaines des requêtes comprend l'identification (S4) d'un modèle de requête concernant l'élément respectif de données de profil et basant la requête générée sur ce modèle.

4. Procédé selon l'une quelconque des revendications précédentes, dans lequel, pour au moins certains éléments de données de profil qui comprennent une valeur, la génération (S5) comprend l'insertion de la valeur dans un modèle de requête pour produire une requête.

5. Procédé selon l'une quelconque des revendications précédentes, dans lequel, pour au moins une partie des éléments de données de profil qui comprennent plusieurs valeurs, la génération (S5) comprend l'insertion de chaque valeur dans un modèle de requête pour produire une requête pour chaque valeur.

6. Procédé selon l'une quelconque des revendications précédentes, dans lequel les requêtes comprennent un code de programme informatique destiné à adresser le contenu du fichier de données.

7. Procédé selon l'une quelconque des revendications précédentes, dans lequel les requêtes comprennent un code de programme informatique destiné à adresser les données codées en langage de balisage extensible, XML^{™}.

8. Procédé selon l'une quelconque des revendications précédentes, dans lequel les requêtes comprennent un code de programme informatique en langage XML^{™} Path, Xpath^{™}.

9. Procédé selon l'une quelconque des revendications précédentes, dans lequel au moins certaines des requêtes générées peuvent identifier si une chaîne de données particulière est incluse ou pas dans le fichier de données.

10. Procédé selon l'une quelconque des revendications précédentes, dans lequel au moins certains éléments des requêtes générées peuvent identifier si des données particulières dans le fichier de données dépassent une valeur de requête.

11. Procédé selon la revendication 10, dans lequel la valeur de requête est identique à la valeur de l'élément de données de profil à partir duquel la requête a été générée.

12. Procédé selon l'une quelconque des revendications précédentes, dans lequel la routine de test générée contient des requêtes concernant un seul dispositif mobile.

13. Procédé selon l'une quelconque des revendications précédentes, comprenant la répétition de la production de la routine de test pour différents dispositifs mobiles afin de produire de multiples routines de test.

14. Procédé de fourniture d'une routine de test pour tester des services devant être fournis à un dispositif mobile sur un réseau de télécommunications mobiles, le procédé comprenant :
la génération de la routine de test en conformité avec le procédé de l'une quelconque des revendications précédentes ; et
le téléversement de la routine vers un serveur sécurisé (4) pour téléchargement par des utilisateurs autorisés (5).

15. Code de programme informatique adapté pour réaliser le procédé de l'une quelconque des revendications précédentes lorsqu'il est traité par un ordinateur.

16. Code de programme informatique selon la revendication 15, porté par un support lisible par ordinateur.

17. Ordinateur configuré pour réaliser le procédé de l'une quelconque des revendications 1 à 14.
